# EUROPÄISCHE PATENTANMELDUNG

(11) **EP 2 374 352 A1**
(43) Veröffentlichungstag der Anmeldung: **12.10.2011**
(21) Anmeldenummer: 11000346.4
(22) Anmeldetag: 18.01.2011
(51) Int. Cl.: A01M 29/16

(54) **Vorrichtung zum Vertreiben von Maulwürfen**

(30) Priorität: 07.04.2010 DE 102010003685
(71) Anmelder: Freifrau von Nolcken, Ulrike, 33104 Paderborn (DE)
(72) Erfinder: Freifrau von Nolcken, Ulrike, 33104 Paderborn (DE)
(74) Vertreter: Ostermann, Thomas

(57) **Zusammenfassung**

Die Erfindung betrifft eine Vorrichtung zum Vertreiben von im Erdreich lebenden Tieren, insbesondere von Maulwürfen, Nagetieren und dergleichen, mit einer Signalgeneratoreinheit (1,1') zum Erzeugen von einem Vertreibungssignal und mit einer Übertragungskörpereinheit zum Ausbreiten des Vertreibungssignals innerhalb des Erdreichs, wobei die Übertragungskörpereinheit (2) eine Anzahl von im Erdreich verteilt angeordneten Leitungen (3,3') aufweist, die derart ausgebildet sind, dass das Vertreibungssignal mittels der Leitungen (3,3') übertragen und/oder verteilt wird, wobei es sich flächenmäßig in dem die Leitungen (3,3') umgebenden Erdreich (13) ausbreitet.

## Beschreibung

Die Erfindung betrifft eine Vorrichtung zum Vertreiben von im Erdreich lebenden Tieren, insbesondere von Maulwürfen, Nagetieren und dergleichen, mit einer Signalgeneratoreinheit zum Erzeugen von einem Vertreibungssignal und mit einer Übertragungskörpereinheit zum Ausbreiten des Vertreibungssignals innerhalb des Erdreichs.

Aus der DE 40 21 892 C2 ist eine Vorrichtung zum Vertreiben von im Erdreich lebenden Tieren, wie beispielsweise Maulwürfen, bekannt, die im Wesentlichen eine Signalgeneratoreinheit zum Erzeugen eines Vertreibungssignals im unteren hörbaren Schallfrequenzbereich (70 Hz bis 130 Hz) aufweist. Die Signalgeneratoreinheit ist in einem stabförmigen Gehäuse integriert angeordnet, das ein Einschraubgewinde zum Verankern desselben im Erdreich aufweist. Das stabförmige Gehäuse dient somit als Übertragungskörpereinheit zum Einleiten bzw. Ausbreiten des Vertreibungssignals innerhalb des Erdreichs. Die Einleitung des Vertreibungssignals erfolgt allerdings lokal an der Stelle, an der der stabförmige Körper in das Erdreich eingetrieben wird. Soll ein größerer Flächenbereich des Erdreichs durch das Vertreibungssignal erfasst werden, ist es erforderlich, eine Mehrzahl von stabförmigen Körpern verteilt in das Erdreich einzubringen. Hierdurch steigt der Kostenaufwand, da an jeder Einbringstelle eine vorzugsweise batteriebetriebene Signalgeneratoreinheit erforderlich ist. Darüber hinaus ist die Wartung relativ aufwändig, da ein Batteriewechsel stets mehrfach erfolgen muss.

Aufgabe der vorliegenden Erfindung ist es daher, eine Vorrichtung zum Vertreiben von in einem Erdreich lebenden Tieren derart weiterzubilden, dass mit geringem Wartungsaufwand eine wirksame und langzeitstabile Vertreibung der im Erdreich lebenden Tiere mit wirtschaftlich vertretbarem Aufwand gewährleistet ist.

Zur Lösung der Aufgabe ist die Erfindung in Verbindung mit dem Oberbegriff des Patentanspruchs 1 dadurch gekennzeichnet, dass die Übertragungskörpereinheit eine Anzahl von im Erdreich verteilt angeordneten Leitungen aufweist, die derart ausgebildet sind, dass das Vertreibungssignal mittels der Leitungen übertragen und/oder verteilt wird, wobei es sich flächenmäßig in dem die Leitungen umgebenden Erdreich ausbreitet.

Nach der Erfindung wird mindestens eine Leitung zur Übertragung und zur Verteilung eines von einer Signalgeneratoreinheit erzeugten Vertreibungssignals eingesetzt. Vorteilhaft ist lediglich eine einzige Signalgeneratoreinheit zumindest für einen Leitungsstrang erforderlich, was den Wartungsaufwand erheblich reduziert. Durch die das Vertreibungssignal übertragende Leitungsanordnung kann das Vertreibungssignal nicht nur punktuell, sondern entlang einer Linie bzw. Kurve in das Erdreich flächendeckend eingebracht bzw. abgestrahlt werden. Bei entsprechender Verlegung der mindestens einen Leitung kann ein relativ großer Flächenbereich unterhalb der Erdoberfläche erfasst werden. Vorzugsweise ist die Signalstärke des abgestrahlten Vertreibungssignals an die Länge der Leitung angepasst, so dass auch ein von der Signalgeneratoreinheit entfernter Punkt der Leitung ein Vertreibungssignal abstrahlen kann.

Nach einer bevorzugten Ausführungsform der Erfindung ist die mindestens eine Leitung der Vorrichtung derart ausgebildet, dass sie zum Transport bzw. zur Verteilung eines strömungsfähigen Mediums, wie beispielsweise einer Flüssigkeit zur Bewässerung, geeignet ist. Die Leitung weist somit eine Doppelfunktion auf. Sie dient zum einen als Übertragungsmittel zum Verteilen und Aussenden des Vertreibungssignals. Zum anderen dient sie zum Verteilen des strömungsfähigen Mediums für einen anderen Einsatzzweck. Vorteilhaft kann hierdurch der Montageaufwand reduziert werden, da die Leitungsanordnung bzw. das Leitungsnetz nur einmalig in dem Erdreich verlegt werden muss.

Nach einer bevorzugten Ausführungsform der Erfindung erfolgt die Mehrfachnutzung der Leitung nicht zeitgleich, sondern zeitversetzt. In einem Bewässerungsmodus der Vorrichtung ist die Leitung über eine Bewässerungssteuereinheit lediglich mit einer Wasserzufuhr verbunden, so dass die Leitung ausschließlich zur Aufnahme, zur Verteilung und gegebenenfalls zur Abgabe des Wassers dient. In einem Vertreibungsmodus der Vorrichtung ist die Leitung ausschließlich mit der Signalgeneratoreinheit verbunden, so dass die vorzugsweise mit Luft gefüllte Leitung (Leitungskörper) als Resonator bzw. Mittel zum Verteilen und Aussenden des Vertreibungssignals dient.

Vorzugsweise ist die Bewässerungssteuereinheit in dem Leitungsnetz austauschbar zu der Signalgeneratoreinheit angeordnet, so dass handhabungstechnisch einfach der Einsatzzweck der Leitung durch Austauschen dieser Funktionsbauteile geändert werden kann.

Nach einer bevorzugten Ausführungsform der Erfindung wird eine Bewässerungsleitungsanordnung für das Vertreiben von im Erdreich lebenden Tieren verwendet, wobei lediglich eine Funktionseinheit der Bewässerungsleitungsanordnung durch eine Signalgeneratoreinheit ersetzt wird. Vorteilhaft kann hierdurch auf einfache Weise eine Bewässerungsvorrichtung in eine Vorrichtung zum Vertreiben von im Erdreich lebenden Tieren umfunktioniert werden und vice versa.

Ein Ausführungsbeispiel der Erfindung wird nachfolgend anhand der Zeichnungen näher erläutert.

Es zeigen:
- Figur 1: ein Blockschaltbild einer erfindungsgemäßen Vorrichtung,
- Figur 2a: eine schematische Darstellung einer austauschbaren Funktionseinheit der Vorrichtung im Bewässerungsmodus und
- Figur 2b: eine schematische Darstellung einer austauschbaren Funktionseinheit der Vorrichtung im Tiervertreibungsmodus.

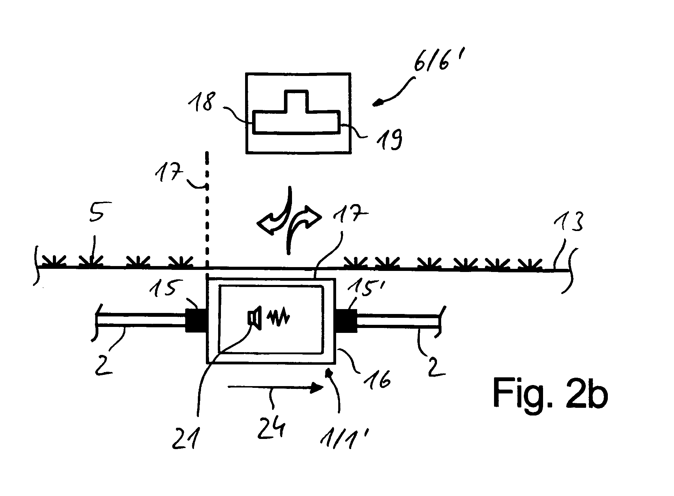

Eine erfindungsgemäße Vorrichtung kann beispielsweise zum Vertreiben von im Erdreich lebenden Tieren, wie beispielsweise Maulwürfen, eingesetzt werden (Fig. 2b). Alternativ kann die erfindungsgemäße Vorrichtung auch überall dort eingesetzt werden, wo bereits ein bekanntes Rohrsystem zum Durchleiten und Verteilen von strömungsfähigen Medien (Flüssigkeiten, Gasen) zur Verfügung steht Fig. 2b) oder zum Beispiel in einer Kanalisation.

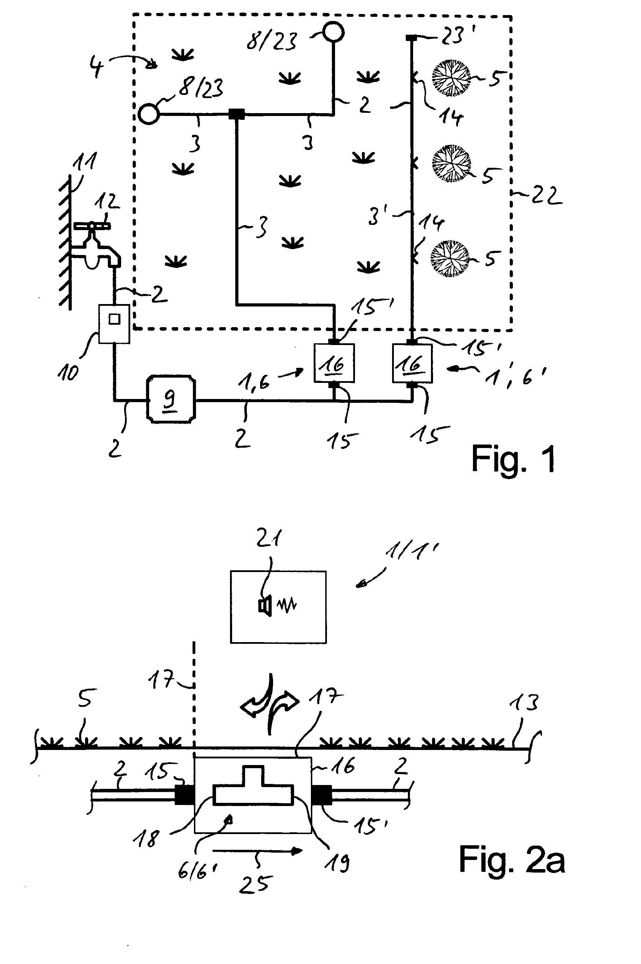

Nach einer Ausführungsform der Erfindung gemäß den Figuren 1 und 2b weist eine Vorrichtung zum Vertreiben von im Erdreich lebenden Maulwürfen im Wesentlichen eine Signalgeneratoreinheit 1, 1' zum Erzeugen eines Maulwürfe abschreckenden Vertreibungssignals sowie eine Übertragungskörpereinheit 2 zum Ausbreiten bzw. Verteilen des Vertreibungssignals innerhalb des Erdreichs auf.

Wie aus Figur 1 zu ersehen ist, ist die Übertragungskörpereinheit 2 als ein Leitungsnetz mit einer Mehrzahl von Leitungen bzw. Leitungssträngen 3, 3' ausgebildet, die jeweils an eine Signalgeneratoreinheit 1 bzw. 1' angeschlossen sind. Da im vorliegenden Ausführungsbeispiel zwei unterschiedlich austauschbare Leitungsstränge 3, 3' vorgesehen sind, sind zwei Signalgeneratoreinheiten 1 bzw. 1' montiert.

Die Leitungen 2, 3, 3' haben eine Doppelfunktion. Sie dienen in einem in Fig. 2b dargestellten Vertreibungsmodus zum einen zum Abschrecken bzw. Vertreiben der im Erdreich hausenden Tiere. Zu diesem Zweck sind die Leitungen strangweise mit der Signalgeneratoreinheit 1, 1' gekoppelt, von der aus ein Vertreibungssignal in Schallausbreitungsrichtung 24 entlang der Leitungsstränge 3, 3' übertragen wird.

Zum anderen dienen die Leitungen 2, 3, 3' in einem in Fig. 2a dargestellten Bewässerungsmodus zum Verteilen und gegebenenfalls Ausgeben von Wasser, damit beispielsweise eine Rasenfläche 4 und eine Reihe von Büschen 5 bewässert wird.

Ein erster Strang 3 von Leitungen 2 führt im Bewässerungsmodus Wasser über ein Verteil-Kupplungselement 7 an unterschiedlich positionierte Sprinkler bzw. Regner 8. Der erste Leitungsstrang 3 ist mit einem ersten Bewässerungsventilgehäuse 6 gekoppelt, das über eine Leitung 2 mit vorzugsweise einem Anschlussgerät 9 und gegebenenfalls über eine Programmiereinheit 10 mit einer Wasserquelle ( z.B. einem an einer Hauswand 11 angeordneten Wasserhahn 12) () verbunden ist.

Das Bewässerungsventilgehäuse 6, 6', das Anschlussgerät 9 und die Programmiereinheit 10 bilden gemeinsam eine Bewässerungssteuereinheit, mittels derer der Volumenstrom der Leitungsstränge 3, 3' einstellbar ist. Nach einer nicht dargestellten Ausführungsform der Erfindung kann das Anschlussgerät 9 und/oder die Programmiereinheit 10 auch weggelassen werden, so dass lediglich das Bewässerungsventilgehäuse 6, 6' die Bewässerungssteuereinheit bildet.

Die Programmiereinheit 10 kann einen Mikrokontroller sowie eine Anzeigeeinheit aufweisen und ermöglicht eine zeitabhängige Wasserzufuhr der Leitungsstränge 3, 3'. Das Anschlussgerät 9 kann einen Wasserfilter sowie Mittel zur Druckreduzierung aufweisen. Während die Programmiereinheit 10 oberhalb eines Erdbodens 13 angeordnet sein kann, befinden sich das Anschlussgerät 9 sowie das als Bewässerungssteuereinheit dienende Bewässerungsventilgehäuse 6, 6' unterhalb des Erdbodens 13 bzw. der Erdoberfläche 13.

Die Leitung 2 bzw. der erste Leitungsstrang 3 und der zweite Leitungsstrang 3' sind als Hohlprofilleitungen ausgebildet. Während der erste Leitungsstrang 3 lediglich als geschlossenes System ausgebildet und an freien Enden über Steckkupplungen mit den Sprinklern 8 verbunden ist, ist der zweite Leitungsstrang 3' abschnittsweise mit einer Wasseraustrittsöffnung 14 zur Tropfenausgabe des Wassers ausgeführt. Diese Wasseraustrittsöffnungen 14 können im Rohr integriert sein oder als gesonderte Tropfenausgeber über ein Kupplungselement 15, mit der Leitung 2 verbunden sein. Die Zuführung des Wassers in den zweiten Leitungsstrang 3' erfolgt durch die zweite Bewässerungssteuereinheit (Bewässerungsventilgehäuse 6'), das an dasselbe Anschlussgerät 9 angeschlossen ist wie die erste Bewässerungssteuereinheit (Bewässerungsventilgehäuse 6). Die Leitungsstränge 3, 3' transportieren das Wasser von den jeweiligen Bewässerungsventilgehäusen 6, 6' in Strömungsrichtung 25 zu den Enden 23, 23'.

Die genannten Funktionseinheiten, wie Bewässerungsventilgehäuse 6, 6', Sprinkler 8, Anschlussgerät 9, Programmiergerät 10 sind vorzugsweise über steckbare Kupplungselemente 15 mit den entsprechenden Leitungen 2 verbunden. Die Leitungen 2 können als Rohre oder flexible Schläuche ausgebildet sein, die bedarfsabhängig im Wesentlichen unterhalb der Erdoberfläche 13 verlaufen.

Im vorliegenden Ausführungsbeispiel kann das Bewässerungsventilgehäuse 6, 6' relativ einfach durch die Signalgeneratoreinheit 1, 1' ersetzt werden. Beide weisen eine solche Größe auf, dass sie in einem Bodengehäuse 16, das mit einem schwenkbaren Deckel 17 versehen ist, positionierbar und mit dem Leitungsnetz 2 verbindbar sind. In den Figuren 2a und 2b ist der geöffnete Deckel 17 gestrichelt dargestellt. Das Bewässerungsventilgehäuse 6, 6' weist einen Aufnahmestutzen 18 und einen Auslassstutzen 19 auf, die jeweils über Kupplungselemente 15 mit der Leitung 3 koppelbar sind.

Die Signalgeneratoreinheit 1, 1' weist ein Gehäuse mit einem Verbindungselement auf, in dem ein zu Schallschwingungen anregbares Element (elektromechanisches Schallerzeugungselement 21) gelagert ist. Das elektromechanische Schallerzeugungselement kann durch einem Elektromotor oder ein Piezoelement oder dergleichen in Schallschwingungen versetzt werden. Das elektromechanische Schallerzeugungselement ist mit dem jeweiligen Leitungsstrang 3, 3' gekoppelt bzw. verbunden, so dass die Schallschwingungen entlang des Leitungsstranges 3, 3' verteilt und darüber auch in das Erdreich eingekoppelt werden. Das in der Signalgeneratoreinheit 1, 1' angeordnete elektromechanische Schallerzeugungselement 21 kann von einer Stromversorgungseinheit bzw. einem Netzteil mit der betriebsnotwendigen Energie versorgt werden. Die Leitungen 2 mit ihren Leitungssträngen 3, 3' bilden in dem Vertreibungsmodus quasi einen Resonanzkörper, der das so erzeugte Vertreibungssignal auf die Rasenfläche 4 und die Beetfläche 5 weiterleitet bzw. transportiert. Dieses Signal stört die im Erdreich lebenden Tiere und verscheucht sie.

Wird beispielsweise das Leitungsnetz 2 im Sommer für die Bewässerung des Gartens genutzt (Bewässerungsmodus), wobei in den jeweiligen Bodengehäusen 16 die Bewässerungsventilgehäuse 6, 6' installiert sind, kann der Nichtbetrieb der Bewässerungsanlage außerhalb der Bewässerungszeit dazu genutzt werden, die Bewässerungsventilgehäuse 6, 6' jeweils durch die Signalgeneratoreinheiten 1, 1' zu ersetzen, so dass die Vorrichtung in den Tiervertreibungsmodus versetzt wird. Hierzu wird der Deckel 17, der sich in einem Ausschnitt der Rasenfläche 5 an der Erdoberfläche 13 befindet, nach oben in eine Öffnungsposition geschwenkt, in der die Bewässerungsventilgehäuse 6, 6' zugänglich sind. Nach Lösen des Bewässerungsventilgehäuses 6, 6' von dem Kupplungselement 15, 15' kann es entnommen und die Signalgeneratoreinheit 1, 1' unter einseitiger Verbindung desselben an dem leitungsstrangseitigen Kupplungselement 15' angeschlossen werden. Die Signalgeneratoreinheit 1, 1' kann ein mikroprozessorgesteuertes Steuergerät enthalten, mittels dessen die Intensität, die Schallfrequenz und die Einschaltdauer bzw. ein intermittierender Betrieb eingestellt werden kann.

Wie aus Figur 1 ersichtlich ist, kann das auf dem Grundstück 22 verteilt angeordnete, unterirdisch verlegte Leitungsnetz 2 zum einen zur Bewässerung von Pflanzen und zum anderen zum Vertreiben von Maulwürfen eingesetzt werden.

Nach einer nicht dargestellten Ausführungsform der Erfindung können die Signalgeneratoreinheiten 1, 1' auch in einem separaten Bodengehäuse positioniert werden, das als Platzhaltergehäuse dient. Das Platzhaltergehäuse würde in der Nähe des Bewässerungsventilgehäuses 6, 6' angeordnet sein, und zwar zwischen Enden 23 bzw. 23' der Leitungsstränge 3 bzw. 3' und dem Bodengehäuse 16. Im Bodentiervertreibungsmodus würden die Signalgeneratoreinheiten 1, 1' installiert und wirksam sein, wobei sie direkt mit den Leitungssträngen 3, 3' gekoppelt sind. Im Bewässerungsmodus sind die Signalgeneratoreinheiten 1, 1' aus dem Platzhaltergehäuse entfernt und durch ein die gegenüberliegenden Öffnungen des Platzhaltergehäuses gekoppelten Verbindungsrohr ersetzt, so dass das Wasser zur Bewässerung in Richtung der Leitungsstränge 3, 3' fließen kann.

Nach einer alternativen Ausführungsform der Erfindung können die Leitungsstränge 3, 3' in dem Bewässerungsmodus statt an zwei an nur einem einzigen (gemeinsamen) Bewässerungsventilgehäuse 6, 6' und in dem Tiervertreibungsmodus an eine gemeinsame Signalgeneratoreinheit angeschlossen sein.

Nach einer nicht dargestellten alternativen Ausführungsform können die Signalgeneratoreinheiten 1, 1' und die Bewässerungssteuereinheit mit ihren Funktionseinheiten 6, 6', 9, 10 auch zeitgleich in Betrieb sein. Die Signalgeneratorsteuereinheiten 1, 1' und die Bewässerungssteuereinheiten 6, 6' könnten beispielsweise in einem gemeinsamen oder mehreren Gehäusen integriert angeordnet sein, so dass ein Dauerbetrieb im Bodentiervertreibungsmodus und in dem Bewässerungsmodus gewährleistet ist.

## Patentansprüche

1. Vorrichtung zum Vertreiben von im Erdreich lebenden Tieren, insbesondere von Maulwürfen, Nagetieren und dergleichen, mit einer Signalgeneratoreinheit zum Erzeugen von einem Vertreibungssignal und mit einer Übertragungskörpereinheit zum Ausbreiten des Vertreibungssignals innerhalb des Erdreichs, **dadurch gekennzeichnet, dass** die Übertragungskörpereinheit eine Anzahl von im Erdreich (13) verteilt angeordneten Leitungen (2, 3, 3') aufweist, die derart ausgebildet sind, dass das Vertreibungssignal mittels der Leitungen (2, 3, 3') übertragen und/oder verteilt wird, wobei es sich flächenmäßig in dem die Leitungen (2, 3, 3') umgebenden Erdreich (13) ausbreitet.

2. Vorrichtung nach Anspruch 1, **dadurch gekennzeichnet, dass** die Leitungen (2, 3, 3') derart ausgebildet sind, dass sie zusätzlich ein strömungsfähiges Medium verteilen.

3. Vorrichtung nach Anspruch 1 oder 2, **dadurch gekennzeichnet, dass** die Leitungen (2, 3, 3') jeweils als Hohlprofilleitungen ausgebildet sind, denen an vorgegebenen Stellen Wasseraustrittsöffnungen (14) zugeordnet sind, und dass die Hohlprofilleitungen über Kupplungselemente (15, 15') miteinander verbindbar sind zur Bildung eines verzweigten Leitungsnetzes (2, 3, 3'), in dem als strömungsfähiges Medium Wasser verteilt wird zur Bewässerung der im Erdboden angeordneten Pflanzen.

4. Vorrichtung nach einem der Ansprüche 1 bis 3, **dadurch gekennzeichnet, dass** die mindestens eine Leitung (2, 3, 3') in einem Bodentiervertreibungsmodus mit der Signalgeneratoreinheit (1, 1') einerseits und in einem Bewässerungsmodus mit einer die Wasserzufuhr steuernden Bewässerungssteuereinheit (6, 6') andererseits verbunden ist.

5. Vorrichtung nach einem der Ansprüche 1 bis 4, **dadurch gekennzeichnet, dass** einerseits die Leitung (2, 3, 3') in dem Tiervertreibungsmodus ausschließlich mit der Signalgeneratoreinheit (1, 1') und in dem Bewässerungsmodus ausschließlich mit der Bewässerungssteuereinheit (6, 6') verbunden ist oder dass andererseits die Leitung (2, 3, 3') unter gleichzeitiger Bereitstellung des Bodentiervertreibungsmodus' und des Bewässerungsmodus' mit der Signalgeneratoreinheit (1, 1') und der Bewässerungssteuereinheit (6, 6') gemeinsam verbunden ist.

6. Vorrichtung nach einem der Ansprüche 1 bis 5, **dadurch gekennzeichnet, dass** die Signalgeneratoreinheit (1, 1') und die Bewässerungssteuereinheit (6, 6') jeweils über ein Kupplungselement (15, 15') mit der Leitung (2, 3, 3') verbindbar sind.

7. Vorrichtung nach einem der Ansprüche 1 bis 6, **dadurch gekennzeichnet, dass** die Bewässerungssteuereinheit ein Bewässerungsventilgehäuse (6, 6') umfasst, das über das Kupplungselement (15) unmittelbar mit einer Wasserquelle oder über ein Anschlussgerät (9) und/oder eine Programmiereinheit (10) mit der Wasserquelle (12) koppelbar ist.

8. Vorrichtung nach einem der Ansprüche 1 bis 7, **dadurch gekennzeichnet, dass** die Signalgeneratoreinheit (1, 1') ein Gehäuse aufweist, in dem ein elektromechanisches Schallerzeugungselement (21) gelagert ist.

9. Verwendung einer Vorrichtung zum Vertreiben von im Erdreich lebenden Tieren nach einem der Ansprüche 1 bis 8 für ein Rohrsystem oder Kanalsystem, das zur Verteilung eines Fluids dient.

10. Verwendung einer Bewässerungsleitungsanordnung für das Vertreiben von im Erdreich lebenden Tieren, wobei eine mit einer Leitung (2, 3, 3') verbundene Funktionseinheit (6, 6') ersetzt wird durch eine Signalgeneratoreinheit (1, 1'), die ein Vertreibungssignal im Schallwellenbereich in die mindestens eine Leitung (2, 3, 3') einspeist.
